(19) Europäisches Patentamt
European Patent Office
Office européen des brevets

(11) **EP 4 431 853 A1**

(12) **EUROPEAN PATENT APPLICATION**

(43) Date of publication:
**18.09.2024 Bulletin 2024/38**

(21) Application number: **23162617.7**

(22) Date of filing: **17.03.2023**

(51) International Patent Classification (IPC):
**F27B 9/02** (2006.01)   **C01B 32/205** (2017.01)
**F27B 9/04** (2006.01)   **F27B 9/14** (2006.01)
**F27B 9/20** (2006.01)   **F27B 9/30** (2006.01)

(52) Cooperative Patent Classification (CPC):
**F27B 9/14; C01B 32/205; F27B 9/02; F27B 9/028;**
**F27B 9/045; F27B 9/20; F27B 9/30;**
F27B 2009/2484

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **SGL Carbon SE**
**65201 Wiesbaden (DE)**

(72) Inventors:
• **ALDRIAN, Patrick**
  **8541 Bad Schwanberg (AT)**

• **JOKANOVIC, Bojan**
  **86405 Meitingen (DE)**
• **KLUG, Herbert**
  **8530 Deutschlandberg (AT)**
• **LOSHER, Richard**
  **86405 Meitingen (DE)**
• **SACKL, Heinz**
  **8541 Bad Schwanberg (AT)**
• **SCHREINER, Christian**
  **86405 Meitingen (DE)**
• **SCHREINER, Tino**
  **86405 Meitingen (DE)**
• **SCHWEIGHART, Marko**
  **8410 Wildon (AT)**

(54) **CASCADING GRAPHITIZATION FURNACE**

(57)    The present disclosure relates to a graphitization furnace for continuously graphitizing particulate carbonaceous material comprising a raw material inlet and a product outlet, and a plurality of sequentially arranged channel sections disposed between the raw material inlet and the product outlet, wherein each of the channel sections is provided with a conveyor screw for transporting the carbonaceous material through the channel section, and at least one transition section which is disposed between two channel sections from said plurality of sequentially arranged channel sections and which is configured to allow transport of carbonaceous material between the two channel sections.

Fig. 1

## Description

### Technical Field

The present invention relates to the field of graphitization furnaces. More specifically, the present invention relates to graphitization furnaces having a cascading arrangement of the furnace channel sections.

### Background

The most common commercially used anode material in lithium-ion batteries is graphite. Artificial graphite may be produced by heating carbonaceous starting materials, such as coke and/or pitch, to temperatures of about 3000 °C or higher under exclusion of oxygen. In practice, the heating may be performed in batch or continuous furnaces. In a continuous furnace, a powdery or granulated carbonaceous material may be conveyed along a heated channel between a raw material inlet and a product outlet, transitioning to graphite while being conveyed. The process of continuous graphitization may be advantageous because it may produce graphite more efficiently. This is of high importance since the preparation of graphite is very energy-intensive. Still, the energy consumption of continuous graphitization furnaces is large.

In addition, product homogeneity and quality are also important. In initial experiments, the inventors of the present application have found that realizing steady and uniform material transport and, thus, product homogeneity and quality, may be problematic in a conventional tubular vertically arranged continuous furnace due to caking and other issues. An improvement in this respect would be desirable.

Moreover, the carbonaceous starting materials may comprise impurities. At the high temperatures of graphitization, these impurities may evaporate or outgas from the carbonaceous material during graphitization as e.g. volatile elements, carbides or oxides. The impurities and the generated volatiles may also be referred to as ash. To attain a high-quality graphite from the graphitization process, the ash needs to be removed from the carbonaceous material and the reaction zone of the furnace. Removing the ash from a furnace operating at temperatures of up to above 3000 °C in a practical, energy- and cost-efficient manner may be challenging.

The present disclosure aims to address one or more of the aforementioned issues of graphitization furnaces.

### Summary

In a first aspect, the present disclosure relates to a graphitization furnace for continuously graphitizing particulate carbonaceous material. The graphitization furnace comprises a raw material inlet and a product outlet. It further comprises a plurality of sequentially arranged channel sections disposed between the raw material inlet and the product outlet. Each of the aforementioned channel sections is provided with a conveyor screw for transporting the carbonaceous material through the respective channel section. The graphitization furnace further comprises at least one transition section which is disposed between two channel sections of the aforementioned plurality of sequentially arranged channel sections. The at least one transition section is configured to allow transport of carbonaceous material between the two aforementioned channel sections.

In some embodiments, at least one channel section of the plurality of sequentially arranged channel sections is configured to transport material in a horizontal direction, in a substantially horizontal direction, or with an angular deviation of more than about 45°, more specifically between about 50° and about 90°, even more specifically between about 60° and about 90°, and in particular between about 75 and about 90°, relative to an axis pointing towards the gravitational center of the earth.

In some embodiments, a first channel section of the plurality of sequentially arranged channel sections extends along a first axis and a neighboring second channel section of the plurality of sequentially arranged channel sections extends along a second axis, wherein: a) a first angle in a horizontal plane is between the first axis and the second axis is between about 15° and about 180°, more specifically between about 30° and about 180°, and in particular between about 45° and about 180°; and/or b) a second angle in a vertical plane is between the first axis and the second axis is between about 15° and about 180°, more specifically between about 30° and about 180°, in particular between about 45° and about 180°; with the proviso that the first angle and the second angle are not both 180°.

In some embodiments, the plurality of sequentially arranged channel sections comprises a first set and a second set of channel sections which are arranged substantially parallel to each other and wherein the first set of channel sections is configured to transport the carbonaceous material in a direction substantially opposite to the second set of channel section.

In some embodiments, at least one channel section of the plurality of sequentially arranged channel sections is at least in portions gas impermeable.

In some embodiments, at least one channel section of the plurality of sequentially arranged channel sections is provided with an internal (adluminal) or external (abluminal) gas barrier layer.

In some embodiments, at least one channel section of the plurality of sequentially arranged channel sections is provided with a conveyor screw which comprises or consists of or is milled from graphite or carbon-fiber-reinforced carbon (CFRC).

In some embodiments, at least one channel section of the plurality of sequentially arranged channel sections comprises a round or oval inner cross-section.

In some embodiments, at least one channel section of the plurality of sequentially arranged channel sections is composed of two or more channel section pieces which are joined to form the channel section, wherein: a) one or more channel section pieces are provided, in a cross-sectional perspective, in a semi-circular or U-shape; and/or b) one or more channel section pieces are provided, in a cross-sectional perspective, in a plate-shape.

In some embodiments, at least one channel section of the plurality of sequentially arranged channel sections comprises or consists of or is milled from graphite or carbon-fiber-reinforced carbon (CFRC).

In some embodiments, at least one channel section of the plurality of sequentially arranged channel sections is provided with a conveyor screw which comprises a flight defining a transport volume in the channel, wherein the graphitization furnace is configured to be operated such that said volume is filled with less than about 50 vol.-%, more specifically between about 45 vol.-% and about 15 vol.%, and in particular between about 35 vol.-% and about 25 vol.-%, of the particulate carbonaceous material.

In some embodiments, at least one channel section of the plurality of sequentially arranged channel sections is provided with a conveyor screw which is formed of a plurality of joined segments.

In some embodiments, at least one channel section of the plurality of sequentially arranged channel sections is provided with a segmented conveyor screw having a terminal end which extends into or through a thermal insulation provided on the exterior of said channel section, wherein the terminal end is formed of a first material and at least one segment adjacent to said terminal end is formed of a second material and wherein the second material is having a lower thermal conductivity that the first material.

In some embodiments, the at least one transition section disposed between two channel sections is a vertical channel, a substantially vertical channel or a channel provided with an angular deviation of less than about 60°, more specifically between about 0° and about 60°, even more specifically between about 0° and about 30°, and in particular between about 0 and about 15°, relative to an axis pointing towards the gravitational center of the earth. In some embodiments, the at least one transition section disposed between two channel sections is provided with an inclination of less than about 60°, more specifically between about 0° and about 60°, even more specifically between about 0° and about 30°, and in particular between about 0 and about 15°, relative to a horizontal axis, i.e. an axis orthogonal to an axis pointing towards the gravitational center of the earth.

In some embodiments, the plurality of sequentially arranged channel sections comprises at least 3 channel sections.

In some embodiments, the plurality of sequentially arranged channel sections comprises at least 3 channel sections, wherein the first section is closer to the raw material inlet than the second section and is configured to be operated at a first temperature, wherein the second section is closer to the raw material inlet than the third section and is configured to be operated at a second temperature, wherein the third section is configured to be operated at a third temperature, and wherein the first temperature and third temperature are lower than the second temperature. In some embodiments, it may be advantageous that the second temperature is between about 2500 and about 3300 °C, more specifically between about 2600 and about 3250 °C, and in particular between about 2800 and about 3200 °C. In some embodiments, it may be advantageous that the first and third temperature are within a range of about 0 to about 2500°C, more specifically about 0 to about 2200°C, and in particular about 0 to about 2000°C.

In some embodiments, the plurality of sequentially arranged channel sections comprises at least two channel sections, wherein the first section is closer to the raw material inlet than the second section and is configured to be operated at a first temperature, wherein the second section is configured to be operated at a second temperature, wherein the first temperature is lower than the second temperature, wherein the conveyor screw of the first section is coupled to an drive unit, in particular an electrically powered drive unit provided external to a thermal insulation of the first section, wherein the conveyor screw of the second section is mechanically coupled to the conveyor screw of the first section by a mechanical force transmission means such that the rotation of the conveyor screw of the first section drives the rotation of the conveyor screw of the second section, and wherein the mechanical force transmission means is provided interior to or within the thermal insulation of the first and/or second section.

In some embodiments, one or more of the plurality of sequentially arranged channel sections is/are provided on their (respective) exterior with one or more heating elements.

In some embodiments, the plurality of sequentially arranged channel sections comprises at least two channel sections, wherein the first section is closer to the raw material inlet than the second section and is configured to be operated at a first temperature, wherein the second section is configured to be operated at a second temperature, wherein the transition section is disposed between the first section and the second section and is provided as a vertical channel, a substantially vertical channel or a channel with an angular deviation of between about 0 and about 30°, relative to an axis pointing towards the gravitational center of the earth, wherein the transition section is configured to be operated at a third temperature, wherein the first temperature and second temperature are lower than the third temperature.

In a second aspect, the present invention is directed toward a method of using a graphitization furnace, as defined in any of the embodiments disclosed above with respect to the first embodiment, for preparing graphite from carbonaceous material.

**Description of the Figures**

Fig. 1     shows an exemplary graphitization furnace according to the present disclosure.
Fig. 1a    shows a part of on an exemplary graphitization furnace according to the present disclosure.
Fig. 2     shows a cross-sectional perspective of exemplary channel segments of the present disclosure.
Fig. 3     shows an exemplary conveyor screw of the present disclosure.
Fig. 4     shows the same exemplary graphitization furnace as Fig. 1, but highlights different features.

**Detailed Description**

Hereinafter, a detailed description will be given of the present disclosure. The terms or words used in the description and the aspects of the present disclosure are not to be construed limitedly as only having common-language or dictionary meanings and should, unless specifically defined otherwise in the following description, be interpreted as having their ordinary technical meaning as established in the relevant technical field. The detailed description will refer to specific embodiments to better illustrate the present disclosure, however, it should be understood that the presented disclosure is not limited to these specific embodiments.

In a first aspect, the present disclosure relates to a graphitization furnace for continuously graphitizing particulate carbonaceous material. The graphitization furnace comprises a raw material inlet and a product outlet. It further comprises a plurality of sequentially arranged channel sections disposed between the raw material inlet and the product outlet. Each of the channel sections is provided with a conveyor screw for transporting the carbonaceous material through the respective channel section. The graphitization furnace further comprises at least one transition section which is disposed between two channel sections from the aforementioned plurality of sequentially arranged channel sections. The at least one transition section is configured to allow transport of carbonaceous material between the two aforementioned channel sections.

Generally, speaking, graphitization furnaces are well-known in the art and refer to high-temperature furnaces which are operated at temperatures of e.g. more than about 2800°C to convert carbonaceous starting material which typically comprises non-crystalline carbon such as coke and/or pitch to graphite under the exclusion of oxygen.

The term "graphite" is well known and, for the purposes of this disclosure, attributed its common meaning in the art. More specifically, the term "graphite" may refer to a material comprising crystalline carbon in a hexagonal structure. Alternatively or additionally, the term "graphite" may refer to a material comprising at least about 60 %, more specifically at least about 80 % and in particular at least about 83 % crystalline carbon in a hexagonal structure. Alternatively or additionally, the term "graphite" may refer to a material with a graphitization degree of at least about 46 %, more specifically 69 %, even more specifically at least about 80 %, and in particular at least about 83 %.

The crystallinity of a graphite may be described via its graphitization degree which may be measured by X-ray diffraction (XRD). The crystalline carbon in the graphite forms a plurality of honeycomb lattices. The distance between the plurality of honeycomb lattices is described by the parameter "interplane distance d002." XRD may be used to measure the interplane distance d002 between the plurality of lattices. An interplane distance d002 of 0.3440 nm corresponds to the interplane distance of turbostratic graphite and an interplane distance of 0.3354 nm corresponds to the interplane distance in a perfect graphite crystal.

The interplane distance may be used to calculate the graphitization degree by the following formula:

$$\text{Graphitization Degree} = (0.3440\text{nm} - \text{d}002)/(0.3440\text{nm} - 0.3354\text{nm})$$

A higher graphitization degree may correspond to a higher maximum discharge capacity in a battery.

According to the present disclosure, the graphitization is carried out in a continuous furnace, i.e. a furnace which is configured for a continuous or semi-continuous production of graphite. In a continuous furnace, carbonaceous raw material is conveyed along a channel between a raw material inlet and a product outlet while being heated. In a continuous furnace, the material flow may be truly continuous (optionally at different rates in different sections of the furnace), but a semi-continuous production which also includes keeping the reaction mixture stationary for certain residence times are also possible. The furnace being configured for a continuous or semi-continuous production of graphite may exclude a batch-wise production process of graphite in one or more crucibles.

The carbonaceous raw material to be graphitized may be in any particulate form, for instance in powder form or granulated form, more specifically in powder form.

In the following, the design of the graphitization furnace is described further:

The graphitization furnace comprises a raw material inlet and a product outlet. The raw material inlet is not particularly limited and generally is the part of the furnace where the raw material is fed into a channel which constitutes the beginning of the reaction chamber (i.e. the channel) in which the graphitization reaction is taking place. The raw material inlet may be optionally equipped with *i.a.* a feed meter, a drying station, a vacuum degassing station, a gas port for supplying an inert gas, or any combination thereof. The product outlet is not particularly limited and generally is the part of the furnace where the graphitized product is withdrawn from the reaction chamber (i.e. the channel). For sake of clarity, the process of cooling the graphitized material from graphitization temperatures to lower temperatures which are suitable for further handling the material (typically about ambient temperatures) is considered for the present purposes as a part of the graphitization reaction and is taking place within the reaction chamber (i.e. the channel) in which the graphitization reaction is taking place. The product outlet is an aperture for removing the prepared graphite from the channel and may be optionally fitted with further equipment such as a flush port to preserve the inert gas atmosphere within the reaction chamber (i.e. the channel).

The graphitization furnace further comprises a plurality of sequentially arranged channel sections disposed between the raw material inlet and the product outlet. Each of the channel sections is provided with a conveyor screw for transporting the carbonaceous material through the respective channel section. The graphitization furnace further comprises at least one transition section which is disposed between two channel sections from the aforementioned plurality of sequentially arranged channel sections. The at least one transition section is configured to allow transport of carbonaceous material between the two aforementioned channel sections.

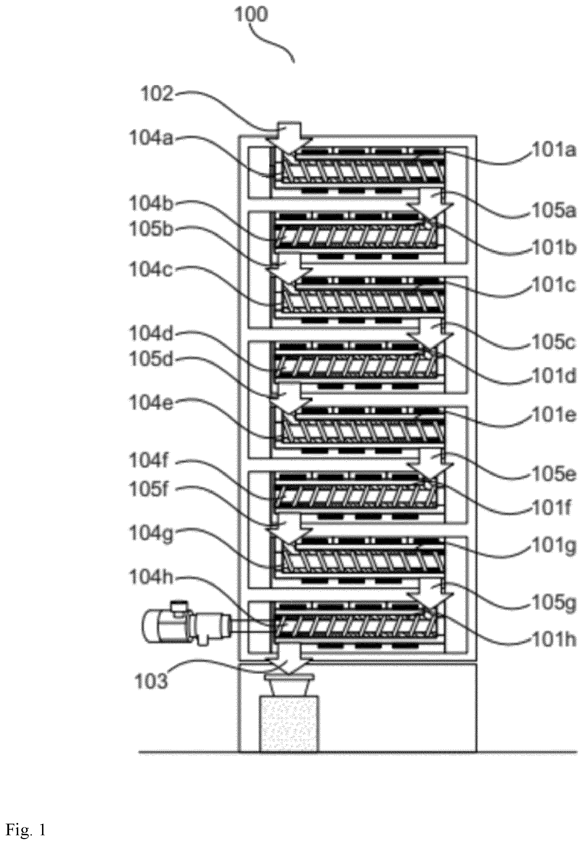

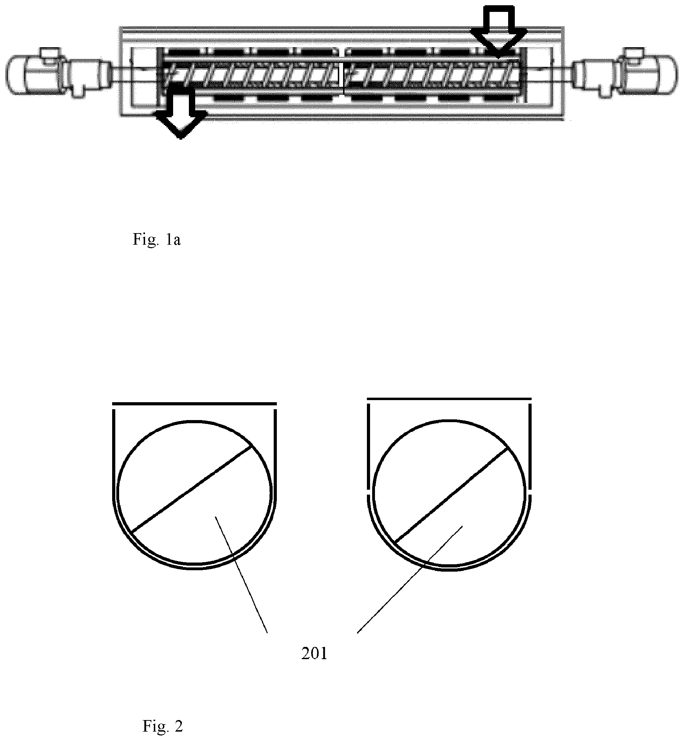

These features will be further elaborated with reference to Fig. 1 which shows an exemplary graphitization furnace of the present disclosure. Fig. 1 shows a graphitization furnace (100) comprising a plurality of sequentially arranged channel sections, more specifically eight channel sections (101a-101h) which are disposed between the raw material inlet (102) and the product outlet (103). Each of the channel sections is provided with a conveyor screw for transporting the carbonaceous material through the respective channel section. In Fig. 1, the eight channel sections (101a-101h) are each equipped with a conveyor screw (104a-104h) which each actively transport the carbonaceous material in horizontal direction from the top-side inlet end of the channel section to the bottom-side outlet end of the channel section.

Furthermore, the graphitization furnace of the present disclosure comprises at least one transition section which is also part of the overall channel and which is disposed between two channel sections of the aforementioned plurality of sequentially arranged channel sections. In Fig. 1, seven transition sections (105a-105g) are arranged between the eight horizontally oriented channel sections (101a-101h). As shown in Fig. 1, a transition section may connect two adjacent channel sections with each other, more specifically an outlet opening of a first channel section with an inlet opening of a second channel section. The at least one transition section has to be configured to allow transport of carbonaceous material between the two aforementioned channel sections. This implies in particular that the transition section is sized and positioned such that the carbonaceous material may leave the respective first (upstream) channel section and enter the respective second (downstream) channel section. In Fig. 1, the seven transition sections (105a-105g) are each vertically provided beneath the outflow end of the respective upstream channel section such that the carbonaceous material which is actively transported by the respective conveyor screw to the outlet of the respective channel section can travel in a gravity-assisted fashion (e.g. drop) into the vertical transition section and, from there, into the top-side inlet end of the respective downstream channel section provided beneath the transition section.

The aforementioned design may have a number of benefits:

First, in comparison to a solely vertically or solely horizontally arranged graphitization furnace, the above design is more compact and requires less space in the factory. Even more importantly, the more compact design may have a smaller relative surface area such that the thermal insulation may be more energy efficient.

Moreover, the partitioning of the furnace's reaction channel into a cascading arrangement of channel sections may facilitate maintenance of the furnace: For instance, individual screw elements are more easily retrievable from the furnace channel since they are much shorter and easier to handle. In addition, the screws may be individually replaced. This may be important considering that only a portion of the screws is subjected to maximum graphitization temperatures of (in Fig. 1) 3200°C. At these high temperatures, wear may be increased in comparison to the colder-side screws. The present furnace design may allow an easier access to screws subject to increased wear whereas a furnace utilizing a single reaction channel would require to retrieve a large section of the screw to be able to access the high-temperature elements (or alternatively require disassembling the reaction channel in the high-temperature zone which is also cumbersome).

Still further, the present furnace design may allow reducing the number of replacement parts. For instance, if - as in Fig. 1 - the individual channel segments and conveyor screws are all identical, repairing the furnace is greatly simplified and more cost-efficient since only a relatively small number of replacement parts must be stocked.

And even still further, the partitioning of the furnace's reaction channel into a cascading arrangement of channel sections allows to more selectively apply heat, inert gases, reactive gases, etc. to certain sections of the furnace. It is also possible to provide a higher loading in some less critical channel sections (in order to improve energy efficiency) and to reduce the loading in those channel sections (by e.g. providing a higher rotation rate to the screw) in which volatiles need to be removed from the carbonaceous material. Such a lower loading will increase the surface area in relation to the bulk of the material and facilitate the removal of the volatiles. The cascading arrangement also provides a simple way of selectively adjusting the residence time of the material in certain temperature ranges.

Many design variations of this general concept are presently contemplated.

The exact number of the sequentially arranged channel is not particularly limited. In some embodiments, the plurality of sequentially arranged channel sections comprises at least 3 channel sections. In some embodiments, the plurality of sequentially arranged channel sections comprises from 2 to about 20, more specifically from 3 to about 16, and in particular from 4 to about 12 channel sections.

The number of transitions sections will depend on the number of channel sections comprised in the plurality of sequentially arranged channel sections and on further design specifics of the furnace. In particular, the number of transition sections may be lower, even substantially lower, than the number of channel sections. For instance, it is contemplated to directly couple two channel sections of the plurality of sequentially arranged channel sections and to actuate one conveyor screw from the upstream side of the two coupled channel sections and to actuate the other conveyor screw from the downstream side of the two coupled channel sections. An exemplary implementation of such design is shown in Fig. 1a. Fig. 1a does not show the full furnace but only the directly coupled two channel sections equipped with two conveyor screws. As in Fig. 1, the transition section feeding material into the first upstream channel section and the transition section receiving material from the downstream second channel section are indicated by arrows. The material fed into the first screw exits the first screw and is then pushed into the second screw at the place where the two channel sections are joined. The material is then conveyed through the second screw to the second transition section. This design feature may reduce stress on the individual screws (due to its reduced length in comparison to having a single long screw) and may reduce the force/torque that has to be applied by the drive unit(s). As seen from this example, there is not necessarily a fixed numerical relationship between the number of channel sections and the number of transition sections.

In some embodiments, the furnace comprises from 1 to about 19, more specifically from 2 to about 15, and in particular from 3 to about 11 transition sections.

In some embodiments, the number of channel sections comprised in the plurality of sequentially arranged channel sections is N, with N being an integer, and the number of transition sections is N-1.

In some embodiments, the channel sections comprised in the plurality of sequentially arranged channel sections and the transition sections are alternatingly arranged. This means that one transition section is disposed between every two channel sections.

In some embodiments, the channel sections comprised in the plurality of sequentially arranged channel sections and the at least one transition section form a channel connecting the raw material inlet with the product outlet.

In some embodiments, the graphitization furnace, more specifically the channel connecting the raw material inlet and the product outlet, consists of the plurality of sequentially arranged channel sections and the at least one transition section. However, it is also possible and presently contemplated to integrate further features into the channel. For instance, as will be discussed later on, it is possible to combine the aforementioned plurality of sequentially arranged channel sections and the at least one transition section with a further vertical furnace section. This may be advantageous, in particular if the vertical furnace section is provided in the hottest reaction zone, since wear may be reduced by avoiding the use of mechanical parts in the hottest zone. It would also be possible and is encompassed by the present disclosure to incorporate a channel section which is primarily stirring or agitating the carbonaceous material to e.g. improve product homogeneity.

In some embodiments, one or more channel sections of the plurality of sequentially arranged channel sections is/are configured to transport material in horizontal direction, or in a substantially horizontal direction. One example of a design wherein the channel sections are configured to transport material in horizontal direction is shown in Fig. 1.

However, deviations, in particular declinations, are also contemplated since this feature may reduce the profile of the furnace and, thus, may in particular improve energy efficiency, and may improve the transport of the material, in particular in cases where the channel is oriented such that the material is conveyed downwards. In some embodiments one or more channel sections of the sequentially arranged channel sections is configured to transport material in a non-horizontal manner, in particular on a decline. The terms declination, decline and the like retain their normal meaning in the art and are used interchangeably herein to generally refer to a downward slope.

In some embodiments, one or more channel sections are configured to transport material with a positive or negative angular deviation of more than about 45°, more specifically between about 45° and about 90°, more specifically between about 50° and about 90°, even more specifically between about 60° and about 90°, and in particular between about 75° and about 90°, relative to an axis pointing towards the gravitational center of the earth, such that the transport of the material conveyed within the respective channel section is gravity-assisted.

In some embodiments, one or more channel sections of the plurality of sequentially arranged channel sections has/have a central longitudinal axis which is oriented horizontally, substantially horizontally, or on a declination, in particular with a positive or negative angular deviation of between about 45° and about 90°, more specifically between about 50° and about 90°, even more specifically between about 60° and about 90°, and in particular between about 75 and about 90°, relative to an axis pointing towards the gravitational center of the earth.

In some embodiments, the graphitization furnace is configured in a linear cascading arrangement of the channel sections, in particular wherein all pairs of sequentially arranged channel sections (i.e. two sequentially arranged channel sections) that are connected by a transition section are configured in a manner wherein one channel section of the pair transports material in one direction and the other channel section of the pair transports the material in the opposite or substantially opposite direction. For example, one channel section of the pair may transport the material from left to right and the other channel section of the pair from right to left, preferably horizontally. In some embodiments, all pairs of sequentially arranged channel sections have a transition section disposed between them and are configured to transport material in alternating directions, in particular in opposite or substantially opposite directions. For example, in embodiments comprising three or more channel sections wherein a transition section is disposed between each sequentially arranged channel sections, the odd numbered channel sections (e.g. first, third, etc.) may be configured to transport the carbonaceous material in one direction and the even numbered channel sections (e.g. second, and where applicable fourth, sixth, etc.) may be configured to transport the carbonaceous material in the opposite direction.

In some embodiments, the plurality of sequentially arranged channel sections comprises a first set and a second set of channel sections which are arranged substantially parallel to each other and wherein the first set of channel sections is configured to transport the carbonaceous material in a direction substantially opposite to the second set of channel section. The channel sections comprising a set do not have to be sequentially arranged. One example of such a design is shown in Fig. 1: In Fig. 1, the first, third, fifth and seventh channel section transport the material horizontally from left to right whereas the second, fourth, sixth and eight channel section transport the material horizontally in the opposite direction from right to left. However, other arrangements are also contemplated: For instance, a cascading arrangement wherein (from a top view projection) the channel sections are arranged in a triangular, rectangular, or square configuration are contemplated. Also a modification of the design of Fig. 1 is contemplated in which (from a side view projection) the channel sections are arranged in a staggered configuration in which colder-side segments requiring less effective insulation are grouped together and the hotter segments are segregated in a more effective insulation.

In some embodiments, in particular for reasons of facilitating thermal insulation, it may be advantageous that the furnace is not configured in a linear cascading arrangement of the channel sections, i.e. is configured in a non-linear cascading arrangement of the channel sections. Accordingly, in some embodiments, a first channel section of the plurality of sequentially arranged channel sections extends along a first axis and a neighboring second channel section of the plurality of sequentially arranged channel sections extends along a second axis, wherein: a) a first angle in a horizontal plane is between the first axis and the second axis is between about 15° and about 180°, more specifically between about 30° and about 180°, and in particular between about 45° and about 180°; and/or b) a second angle in a vertical plane is between the first axis and the second axis is between about 15° and about 180°, more specifically between about 30° and about 180°, and in particular between about 45° and about 180°; with the proviso that the first angle and the second angle are not both 180°. It should be understood that, for the purposes of this definition, the terms vertical and horizontal refer to two planes which are orthogonal to each other. The vertical plane may extend towards the gravitational center of the earth.

In some embodiments, one or more of the channel sections has a round, in particular an ovular, or circular inner cross section. A round, and in particular a circular, cross-sectional shape may be beneficial in ensuring efficient and/or reliable transport of carbonaceous material by the conveyor screw. An ovular cross-sectional shape may be further beneficial in providing space around the conveyor screw to facilitate gas exchange in the channel section. In particular, if the channel sections have a cross section in the shape of an oval, it may be advantageous that the longer axis of the oval is arranged vertically since this may further facilitate the gas exchange by directing it above the conveyor screw.

In some embodiments, at least one channel section of the plurality of sequentially arranged channel sections is composed of two or more channel section pieces which are joined to form the respective channel section. This may facilitate the production of the channel sections, in particular in case the channel sections are to be milled from a graphite block or similar material. The channel section pieces may be joined by any suitable means, in particular using fastening means such as bolts or screws or external clamps or be adhesively joined by means comprising e.g. pitch or resins (which is subsequently carbonized/graphitized) or a combination thereof.

In some embodiments, at least one channel section of the plurality of sequentially arranged channel sections is composed of two or more channel section pieces which are joined to form the channel section, wherein: a) one or more channel section pieces are provided, in a cross-sectional perspective, in a semi-circular or U-shape; and/or b) one or more channel section pieces are provided, in a cross-sectional perspective, in a plate-shape. It should be understood that the term "plate-shaped" is attributed its conventional meaning in the art and, additionally or alternatively, may refer to a channel section piece which has at least two planar surfaces.

In some embodiments, at least one channel section is composed of two semi-circular cross-sectional channel section pieces or two U-shaped cross-sectional channel section pieces, which are joined to form the respective channel section, forming a channel section with a circular and an ovular cross section, respectively.

In other embodiments, at least one channel section is composed of one channel section piece that has a semi-circular or U-shaped cross-section, and one or more channel section pieces that has/have a plate-shaped cross section. Examples of such channel shapes are shown in Fig. 2, which shows a cross section of two different channel section embodiments, each composed of two or more channel section pieces. More specifically, Fig. 2 on the left shows a U-shaped channel section piece which is combined with one plate-shaped channel section piece on top of the U-shaped channel section piece. Fig. 2 on the right shows a semi-circular channel section piece on the bottom, which is combined with three plate-shaped channel section pieces, two of which are arranged vertically on top of the semi-circular channel section piece, and one of which is arranged horizontally on top of the vertically arranged plates. The positioning of a conveyor screw (201) in the channel sections is also shown. Such designs may be more cost efficient to produce since producing/milling shapes with a curvature is substantially more expensive than producing plate-shaped pieces. Moreover, these designs may provide the same advantages as discussed above for the oval cross-sectional shape.

Preferably, two sequentially arranged channel sections that are directly connected to one another, i.e. are sequentially arranged without a transition section disposed between them, have the same cross-sectional shape and dimensions.

In some embodiments, at least one channel section comprises or consists of or is milled from graphite or carbon-fiber-reinforced carbon (CFRC).

In some embodiments, at least one channel section of the plurality of sequentially arranged channel sections is at least in portions gas-impermeable. This may be beneficial in more selectively providing inert gas flows, reactive gas flows and/or purge gas flows to certain sections of the furnace. Moreover, it may be beneficial in preventing condensation of volatiles in other furnace parts such as heating equipment and insulation materials which is provided external to the respective channel section. In some embodiments, it may be advantageous that all channel sections of the plurality of sequentially arranged channel sections are, at least in portions, gas-impermeable. In this context, "at least in portions" includes in particular the entirety of the channel section. In those embodiments wherein at least one channel section of the plurality of sequentially arranged channel sections is composed of two or more channel section pieces which are joined to form the channel section, at least one of those pieces may be gas-impermeable.

In some embodiments, at least one transition section is at least in portions gas-impermeable. In some embodiments, it may be advantageous that all transition sections are, at least in portions, gas-impermeable. In this context, "at least in portions" includes in particular the entirety of the transition section. However, in those embodiments where at least one transition section is composed of two or more transition section pieces which are joined to form the transition section, at least one of those pieces may be gas-impermeable.

In these and other instances, the reference to a gas-permeable material may in particular refer to a material having a gas permeability of at least 0.3 $cm^2/s$ measured according to DIN 51935:2019-07. In these and other instances, the reference to a gas-impermeable material may in particular refer to a material having a gas permeability of less than 0.3 $cm^2/s$ measured according to DIN 51935:2019-07. Suitable materials having the required gas-(im)permeability are well-known to the skilled person. For instance, Sigrafine HLR, HLM and HLS grades may be used as gas-permeable material, and Sigrafine HLX and isostatic graphite grades may be used as gas-impermeable material. All of these grades are available from SGL Carbon GmbH, Germany.

In some embodiments, at least one channel section of the plurality of sequentially arranged channel sections is at least in portions formed of a first material that is gas-permeable and at least one other channel section of the plurality of sequentially arranged channel sections is formed at least in portions of a second material which is also gas-permeable, wherein the gas permeability of the first and second material are measured according to DIN 51935:2019-07 and wherein the gas permeability of the first material is at least 5 times, more specifically at least 8 times, and in particular at least 10 times higher than the gas permeability of the second material. In other words, parts of the furnace's channel are made from a less permeable material than other parts of the channel. Both materials may be (different grades of) graphite or CFRC. In this context, "at least in portions" includes in particular the entirety of the channel section. In those embodiments wherein at least one channel section of the plurality of sequentially arranged channel sections is composed of two or more channel section pieces which are joined to form the channel section, at least one of those pieces may have the first required respective gas permeability and at least one other of those pieces may have the second required respective gas permeability.

In some embodiments, at least one channel section of the plurality of sequentially arranged channel sections is provided with an internal (adluminal) or external (abluminal) gas barrier layer. In some embodiments, at least one transition section of the plurality of sequentially arranged channel sections is provided with an internal (adluminal) or external (abluminal) gas barrier layer. Gas barrier layers are well-known in the art and include various carbide coatings/layers (e.g., depending on the temperature in the respective zone, SiC and TaC) but also carbonaceous coatings/layers, infiltrations or impregnations which occlude the pores in graphite, and carbon-based films such as a graphite foil with e.g. a density of above 0.3 g/cm$^3$, more specifically between about 0.5 and about 1.9 g/cm$^3$, and in particular between about 0.7 and about 1.9 g/cm$^3$. The gas barrier layer may optionally have a gas permeability of less than 0.3 cm$^2$/s measured according to DIN 51935:2019-07. The gas barrier layer may optionally have a gas permeability which is at least 5 times, more specifically at least 8 times, and in particular at least 10 times, lower than the gas permeability of the bulk material of the channel section. The gas permeabilities may be measured according to DIN 51935:2019-07.

When referring in the above instances to at least one channel section of the plurality of sequentially arranged channel sections, or similar wording, it should be understood that this, in particular, also refers to the respective embodiments in which all or the numerical majority of channel sections of the plurality of sequentially arranged channel sections are endowed with the respective feature.

The design of the conveyor screws is not particularly limited as long as the screw is able to transport the carbonaceous material through the channel section. Useable screw designs are well known in the art and are, in principle, applicable in the present disclosure. The shape of the screw flights may also differ along a screw and from section to section to accommodate various needs (transport, mixing, wear resistance, etc.). However, from a viewpoint of maintenance, it may be advantageous that at least some screws or at least some screw segments are identical. The length of the conveyor screw is also not particularly limited. In some embodiments, the screw extends through the entirety of the channel section. However, it is also possible that in particular the later (i.e. downstream) portion of a channel section is not occupied by a screw. For instance, only about 70 % of the length of a channel section may be occupied by the screw. In the remainder of the channel section, the carbonaceous material is merely pushed forward by subsequent material exiting the screw. This may reduce the wear of the screw and equipment costs. In some embodiments, said remainder of the channel section may have a widening cross-section, in particular a conical or trapezoidal shape, to facilitate the flow of the material.

In some embodiments, at least one channel section is provided with a conveyor screw which comprises or consists of or is milled from graphite or carbon-fiber-reinforced carbon (CFRC).

In some embodiments, the furnace comprises a first conveyor screw and the graphitization furnace is configured to be operated such that said first conveyor screw is operated at less than about 50 vol.-%, more specifically between about 45 vol.-% and about 15 vol.-%, and in particular between about 35 vol.-% and about 25 vol.-%, of its theoretical maximum transport volume. Determining these parameters can be done by routine calculations and/or experimentation, for instance as discussed in the next embodiment below.

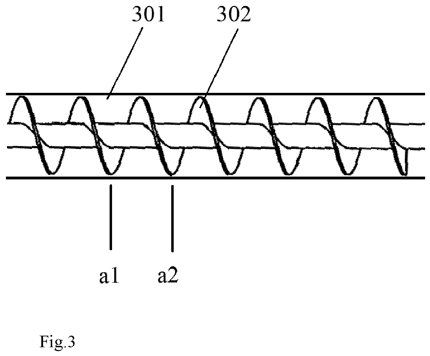

In some embodiments, at least one channel section is provided with a conveyor screw which comprises a flight defining a transport volume in the channel, wherein the graphitization furnace is configured to be operated such that said volume is filled with less than about 50 vol.-%, more specifically between about 45 vol.-% and about 15 vol.-%, and in particular between about 35 vol.-% and about 25 vol.-%, of the particulate carbonaceous material. In other words, the conveyor screw is only partially filled which may reduce problems such as caking and poor mixing of the carbonaceous material during transport and may improve outgassing of volatiles. Determining the degree of filling of the screw is not particularly limited and can be routinely calculated or experimentally measured. One skilled in the art can, for instance, rely on a calculation according to DIN 15262:1983-01. Alternatively, exemplarily explained for the screw shown in Fig. 3, one skilled in the art may proceed as follows: Fig. 3 shows a channel section (301) which is provided with conveyor screw (302). The screw has multiple flights and the peak-to-peak distance from a1 to a2 is representative of a single full flight. The corresponding channel segment from a1 to a2 has an internal volume from which the volume occupied by the single flight itself can be subtracted. This yields the aforementioned transport volume of the flight in the channel section. On basis of this volume, the degree of filling with carbonaceous can be calculated. Experimentally measuring the degree of filling can be done by e.g. using a transparent model of the channel (e.g. a transparent PVC tubing) and a model of the screw. The measurements can be made after achieving a steady-state flow, i.e. the same material flow at the inlet and the outlet.

In some embodiments, at least one channel section is provided with a conveyor screw which is formed of a plurality of joined segments. In some embodiments, at least one channel section is provided with a segmented conveyor screw having a terminal end which extends into or through a thermal insulation provided on the exterior of said channel section, wherein the terminal end is formed of a first material and at least one segment adjacent to said terminal end is formed of a second material and wherein the second material is having a lower thermal conductivity that the first material.

In some embodiments, the at least one transition section disposed between two channel sections is a vertical channel, a substantially vertical channel or a channel provided with an angular deviation of less than about 60°, more specifically between about 0° and about 60°, even more specifically between about 0° and about 30°, and in particular between about 0 and about 15°, relative to an axis pointing towards the gravitational center of the earth. In some embodiments, the at least one transition section disposed between two channel sections is provided with an inclination of less than about 60°, more specifically between about 0° and about 60°, even more specifically between about 0° and about 30°, and in particular between about 0 and about 15°, relative to a horizontal axis, i.e. an axis orthogonal to an axis pointing towards the gravitational center of the earth.

A transition section may have two angular deviations relative to an axis pointing towards the gravitational center of the earth, one being in a plane and the other being in a plane orthogonal to the first plane (in the following the "orthogonal angular deviation"): For sake of clarity, it should be understood that this feature merely requires an angular deviation in one direction whereas the orthogonal angular deviation is not particularly restricted, but may also be less than about 60°, more specifically between about 0° and about 60°, even more specifically between about 0° and about 30°, and in particular between about 0 and about 15°, relative to an axis pointing towards the gravitational center of the earth.

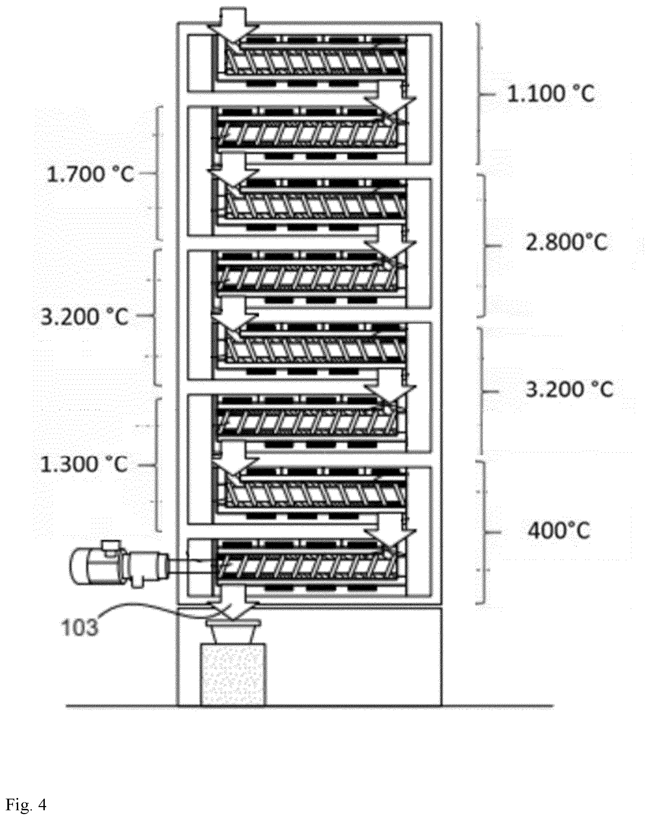

In some embodiments, the plurality of sequentially arranged channel sections comprises at least 3 channel sections, wherein the first section is closer to the raw material inlet than the second section and is configured to be operated at a first temperature, wherein the second section is closer to the raw material inlet than the third section and is configured to be operated at a second temperature, wherein the third section is configured to be operated at a third temperature, and wherein the first temperature and third temperature are lower than the second temperature. In particular in cases where the temperature varies (substantially) within a channel section, the aforementioned temperatures may jointly refer to the temperature of: the inlet end or the outlet end or the center of the respective section. Alternatively, the reference to a temperature may mean that, within a specific channel section, the temperature must fulfil the recited temperature criterium (e.g. above or below a certain temperature, or within a certain temperature range) at all locations within the channel section. In some embodiments, it may be advantageous that the second temperature is between about 2500 and about 3300 °C, more specifically between about 2600 and about 3250 °C, and in particular between about 2800 and about 3200 °C. In some embodiments, it may be advantageous that the first and third temperature are within a range of about 0 to about 2500°C, more specifically about 0 to about 2200°C, and in particular about 0 to about 2000°C. An exemplary temperature schedule for the furnace discussed above in context of Fig. 1 is shown in Fig. 4.

In some embodiments, the plurality of sequentially arranged channel sections comprises at least two channel sections, wherein the first section is closer to the raw material inlet than the second section and is configured to be operated at a first temperature, wherein the second section is configured to be operated at a second temperature, wherein the first temperature is lower than the second temperature, wherein the conveyor screw of the first section is coupled to an drive unit, in particular an electrically powered drive unit provided external to a thermal insulation of the first section, wherein the conveyor screw of the second section is mechanically coupled to the conveyor screw of the first section by a mechanical force transmission means such that the rotation of the conveyor screw of the first section drives the rotation of the conveyor screw of the second section, and wherein the mechanical force transmission means is provided interior to or within the thermal insulation of the first and/or second section. An example of such a design is shown in Fig. 1 where the electrically powered drive unit is shown at the bottom-left and seven mechanical force transmission means (not provided with reference numbers) are provided to couple the eight conveyor screws.

In some embodiments, one or more of the plurality of sequentially arranged channel sections is/are provided on their (respective) exterior with one or more heating elements.

In some embodiments, the plurality of sequentially arranged channel sections comprises at least two channel sections, wherein the first section is closer to the raw material inlet than the second section and is configured to be operated at a first temperature, wherein the second section is configured to be operated at a second temperature, wherein the transition section is disposed between the first section and the second section and is provided as a vertical channel, a substantially vertical channel or a channel with an angular deviation of between about 0 and about 30°, more specifically between about 0° and about 15°, even more specifically between about 0° and about 10°, and in particular between about 0 and about 5°, relative to an axis pointing towards the gravitational center of the earth, wherein the transition section is configured to be operated at a third temperature, wherein the first temperature and second temperature are lower than the third temperature. Again, it should be noted that a transition section may have two angular deviations relative to an axis pointing towards the gravitational center of the earth, one being in a plane and the other being in a plane orthogonal to the first plane (in the following the "orthogonal angular deviation"): For sake of clarity, it should be understood that this features merely requires an angular deviation in one direction whereas the orthogonal angular deviation is not particularly restricted, but may also be between about 0° and about 30°, more specifically between about 0° and about 15°, even more specifically between about 0° and about 10°, and in particular between about 0 and about 5°, relative to an axis pointing towards the gravitational center of the earth.

In some embodiments, the transition section is provided with one or more heating elements.

In some embodiments, it may be particularly advantageous that the shape of the transition section is conical towards the second channel section, wedge-shaped towards the second channel section and/or provided with a widening cross-section towards the second channel section.

It should be understood that all of the aforementioned embodiments of the first aspect of the present disclosure can be freely combined and that such combinations are part of the present disclosure.

In a second aspect, the present invention is directed toward a method of using a graphitization furnace, as defined in any of the embodiments disclosed above with respect to the first aspect, for preparing graphite from carbonaceous material.

The method in particular includes feeding a carbonaceous starting material to the graphitization furnace, converting the carbonaceous starting material to graphite within the furnace, and discharging graphite from the furnace.

The present disclosure also pertains to the following list of embodiments:

1. A graphitization furnace for continuously graphitizing particulate carbonaceous material comprising:

   a raw material inlet and a product outlet,
   and a plurality of sequentially arranged channel sections disposed between the raw material inlet and the product outlet,
   wherein each of the channel sections of the plurality of sequentially arranged channel sections is provided with a conveyor screw for transporting the carbonaceous material through the channel section, and
   at least one transition section which is disposed between two channel sections from said plurality of sequentially arranged channel sections and which is configured to allow transport of carbonaceous material between the two channel sections.

2. The graphitization furnace of embodiment 1, wherein the at least one channel section of the plurality of sequentially arranged channel sections is configured to transport material in horizontal direction, in a substantially horizontal direction, or with a positive or negative angular deviation of more than about 45°, more specifically between about 50° and about 90°, even more specifically between about 60° and about 90°, and in particular between about 75 and about 90°, relative to an axis pointing towards the gravitational center of the earth.

3. The graphitization furnace according to any preceding embodiment, wherein a first channel section of the plurality of sequentially arranged channel sections extends along a first axis and a neighboring second channel section of the plurality of sequentially arranged channel sections extends along a second axis, wherein:

   a) a first angle in a horizontal plane is between the first axis and the second axis is between about 15° and about 180°, more specifically between about 30° and about 180°, and in particular between about 45° and about 180°; and/or
   b) a second angle in a vertical plane is between the first axis and the second axis is between about 15° and about 180°, more specifically between about 30° and about 180°, and in particular between about 45° and about 180°;

with the proviso that the first angle and the second angle are not both 180°.

4. The graphitization furnace according to any preceding embodiment, wherein the plurality of sequentially arranged channel sections comprises a first set and a second set of channel sections which are arranged substantially parallel to each other and wherein the first set of channel sections is configured to transport the carbonaceous material in a direction substantially opposite to the second set of channel section.

5. The graphitization furnace according to any preceding embodiment, wherein at least one channel section of the plurality of sequentially arranged channel sections is at least in portions gas impermeable.

6. The graphitization furnace according to any preceding embodiment, wherein at least one channel section of the plurality of sequentially arranged channel sections is provided with an internal (adluminal) or external (abluminal) gas barrier layer.

7. The graphitization furnace according to any preceding embodiment, wherein at least one channel section of the plurality of sequentially arranged channel sections is provided with a conveyor screw which comprises or consists of or is milled from graphite or carbon-fiber-reinforced carbon (CFRC).

8. The graphitization furnace according to any preceding embodiment, wherein at least one channel section of the plurality of sequentially arranged channel sections comprises two or more channel section pieces which are joined to form said channel section, wherein:

a) one or more channel section pieces are provided, in a cross-sectional perspective, in a semi-circular or U-shape, and/or

b) one or more channel section pieces are provided, in a cross-sectional perspective, in a plate-shape.

9. The graphitization furnace according to any preceding embodiment, wherein at least one channel section of the plurality of sequentially arranged channel sections comprises or consists of or is milled from graphite or carbon-fiber-reinforced carbon (CFRC).

10. The graphitization furnace according to any preceding embodiment, wherein at least one channel section of the plurality of sequentially arranged channel sections is provided with a conveyor screw which comprises a flight defining a transport volume in the channel, wherein the graphitization furnace is configured to be operated such that said volume is filled with less than about 50 vol.-%, more specifically between about 45 vol.-% and about 15 vol.-%, and in particular between about 35 vol.-% and about 25 vol.-%, of the particulate carbonaceous material.

11. The graphitization furnace according to any preceding embodiment, wherein at least one channel section of the plurality of sequentially arranged channel sections is provided with a conveyor screw which is formed of a plurality of joined screw segments.

12. The graphitization furnace according to any preceding embodiment, wherein at least one channel section of the plurality of sequentially arranged channel sections is provided with a segmented conveyor screw having a terminal end which extends into or through a thermal insulation provided on the exterior of said channel section, wherein the terminal end is formed of a first material and at least one segment adjacent to said terminal end is formed of a second material and wherein the second material is having a lower thermal conductivity than the first material.

13. The graphitization furnace according to any preceding embodiment, wherein the at least one transition section disposed between two channel sections is a vertical channel, a substantially vertical channel or a channel provided with an angular deviation of less than about 60°, relative to an axis pointing towards the gravitational center of the earth; more specifically between about 0° and about 60°, even more specifically between about 0° and about 30°, and in particular between about 0 and about 15°, relative to an axis pointing towards the gravitational center of the earth; or wherein the at least one transition section disposed between two channel sections is provided with an inclination of less than about 60°, more specifically between about 0° and about 60°, even more specifically between about 0° and about 30°, and in particular between about 0 and about 15°, relative to a horizontal axis, i.e. an axis orthogonal to an axis pointing towards the gravitational center of the earth.

14. The graphitization furnace according to any preceding embodiment, wherein the plurality of sequentially arranged channel sections comprises at least 3 channel sections.

15. The graphitization furnace according to any preceding embodiment, wherein the plurality of sequentially arranged channel sections comprises at least 3 channel sections,

wherein the first section is closer to the raw material inlet than the second section and is configured to be operated at a first temperature,
wherein the second section is closer to the raw material inlet than the third section and is configured to be operated at a second temperature,
wherein the third section is configured to be operated at a third temperature, and wherein the first temperature and third temperature are lower than the second temperature.

16. The graphitization furnace according to embodiment 17, wherein the second temperature is between about 2500 and about 3300 °C, more specifically between about 2600 and about 3250 °C, and in particular between about 2800 and about 3200 °C.

17. The graphitization furnace according to embodiment 17 or embodiment 18, wherein the first and third temperature are within a range of about 0 to about 2500°C, more specifically about 0 to about 2300°C, and in particular about 0 to about 2000°C.

18. The graphitization furnace according to any preceding embodiment, wherein the plurality of sequentially arranged channel sections comprises at least two channel sections,

wherein the first section is closer to the raw material inlet than the second section and is configured to be operated at a first temperature,

wherein the second section is configured to be operated at a second temperature, wherein the first temperature is lower than the second temperature,

wherein the conveyor screw of the first section is coupled to a drive unit, in particular an electrically powered drive unit provided external to a thermal insulation of the first section,

wherein the conveyor screw of the second section is mechanically coupled to the conveyor screw of the first section by a mechanical force transmission means such that the rotation of the conveyor screw of the first section drives the rotation of the conveyor screw of the second section, and

wherein the mechanical force transmission means is provided interior to or within the thermal insulation of the first and/or second section.

19. The graphitization furnace according to any preceding embodiment, wherein at least one channel section of the plurality of sequentially arranged channel sections comprises a round or oval inner cross-section.

20. The graphitization furnace according to any preceding embodiment, wherein one or more channel sections of the plurality of sequentially arranged channel sections is provided on the exterior with one or more heating elements.

21. The graphitization furnace according to any preceding embodiment, wherein the plurality of sequentially arranged channel sections comprises at least two channel sections,

wherein the first section is closer to the raw material inlet than the second section and is configured to be operated at a first temperature,

wherein the second section is configured to be operated at a second temperature,

wherein the transition section is disposed between the first section and the second section and is provided as a vertical channel, a substantially vertical channel, or a channel with an angular deviation of between about 0 and about 30°, relative to an axis pointing towards the gravitational center of the earth,

wherein the transition section is configured to be operated at a third temperature,

wherein the first temperature and second temperature are lower than the third temperature.

22. The graphitization furnace according to embodiment 21, wherein the shape of the transition section is conical towards the second channel section, wedge-shaped towards the second channel section and/or provided with a widening cross-section towards the second channel section.

23. Method of using a graphitization furnace according to any preceding embodiment for preparing graphite from a carbonaceous material.

**Claims**

1. A graphitization furnace for continuously graphitizing particulate carbonaceous material comprising:

a raw material inlet and a product outlet;

a plurality of sequentially arranged channel sections disposed between the raw material inlet and the product outlet,

wherein each of the channel sections of the plurality of sequentially arranged channel sections is provided with a conveyor screw for transporting the carbonaceous material through the channel section; and

at least one transition section which is disposed between two of the sequentially arranged channel sections from said plurality of sequentially arranged channel sections, and which is configured to allow transport of carbonaceous material between the two channel sections.

2. The graphitization furnace of claim 1, wherein at least one channel section of the plurality of sequentially arranged channel sections is configured to transport material in horizontal direction, in a substantially horizontal direction, or with a positive or negative angular deviation of between about 45° and about 90°, relative to an axis pointing towards the gravitational center of the earth; more specifically between about 50° and about 90°, even more specifically between about 60° and about 90°, and in particular between about 75 and about 90°, relative to an axis pointing towards the gravitational center of the earth.

3. The graphitization furnace according to any preceding claim, wherein a first channel section of the plurality of sequentially arranged channel sections extends along a first axis and a neighboring second channel section of the plurality of sequentially arranged channel sections extends along a second axis, wherein:

a) a first angle in a horizontal plane is between the first axis and the second axis is between about 15° and about 180°; more specifically between about 30° and about 180°, and in particular between about 45° and about 180°; and/or
b) wherein a second angle in a vertical plane is between the first axis and the second axis is between about 15° and about 180°; more specifically between about 30° and about 180°, and in particular between about 45° and about 180°;

with the proviso that the first angle and the second angle are not both 180°.

4. The graphitization furnace according to any preceding claim, wherein the at least one transition section is disposed between two sequentially arranged channel sections that are configured to transport material in substantially opposite directions relative to one another.

5. The graphitization furnace according to any preceding claim, wherein at least one channel section of the plurality of sequentially arranged channel sections is at least in portions gas impermeable.

6. The graphitization furnace according to any preceding claim, wherein at least one channel section of the plurality of sequentially arranged channel sections is provided with an internal (adluminal) or external (abluminal) gas barrier layer.

7. The graphitization furnace according to any preceding claim, wherein at least one channel section of the plurality of sequentially arranged channel sections is provided with a conveyor screw which comprises or consists of or is milled from graphite or carbon-fiber-reinforced carbon (CFRC).

8. The graphitization furnace according to any preceding claim, wherein at least one channel section of the plurality of sequentially arranged channel sections comprises or consists of or is milled from graphite or carbon-fiber-reinforced carbon (CFRC).

9. The graphitization furnace according to any preceding claim, wherein at least one channel section of the plurality of sequentially arranged channel sections is provided with a conveyor screw which comprises a flight defining a transport volume in the channel, wherein the graphitization furnace is configured to be operated such that said volume is filled with less than about 50 vol.-%, more specifically between about 45 vol.-% and about 15 vol.-%, and in particular between about 35 vol.-% and about 25 vol.-%, of the particulate carbonaceous material.

10. The graphitization furnace according to any preceding claim, wherein at least one channel section of the plurality of sequentially arranged channel sections is provided with a segmented conveyor screw having a terminal end which extends into or through a thermal insulation provided on the exterior of said channel section, wherein the terminal end is formed of a first material and at least one segment adjacent to said terminal end is formed of a second material and wherein the second material has a lower thermal conductivity than the first material.

11. The graphitization furnace according to any preceding claim, wherein the at least one transition section disposed between two channel sections is a vertical channel, a substantially vertical channel or a channel provided with an angular deviation of less than about 60°, relative to an axis pointing towards the gravitational center of the earth; more specifically between about 0° and about 60°, even more specifically between about 0° and about 30°, and in particular between about 0° and about 15°, relative to an axis pointing towards the gravitational center of the earth.

12. The graphitization furnace according to any preceding claim, wherein the plurality of sequentially arranged channel sections comprises at least 3 channel sections,

wherein the first section is closer to the raw material inlet than the second section and is configured to be operated at a first temperature,
wherein the second section is closer to the raw material inlet than the third section and is configured to be operated at a second temperature,
wherein the third section is configured to be operated at a third temperature, and wherein the first temperature and third temperature are lower than the second temperature.

13. The graphitization furnace according to any preceding claim, wherein the plurality of sequentially arranged channel sections comprises at least two channel sections,

wherein the first section is closer to the raw material inlet than the second section and is configured to be operated at a first temperature,
wherein the second section is configured to be operated at a second temperature,
wherein the transition section is disposed between the first section and the second section and is provided as a vertical channel, a substantially vertical channel, or a channel with an angular deviation of between about 0 and about 30°, relative to an axis pointing towards the gravitational center of the earth,
wherein the transition section is configured to be operated at a third temperature, and
wherein the first temperature and second temperature are lower than the third temperature.

14. The graphitization furnace according to claim 13, wherein the shape of the transition section is conical towards the second channel section, wedge-shaped towards the second channel section and/or is provided with a widening cross-section towards the second channel section.

15. Method of using a graphitization furnace as defined in any preceding claim for preparing graphite from carbonaceous material.

Fig. 1

Fig. 1a

201

Fig. 2

Fig.3

1.100 °C

1.700 °C

2.800°C

3.200 °C

3.200 °C

1.300 °C

400°C

103

Fig. 4

Europäisches
Patentamt

European
Patent Office

Office européen
des brevets

# EUROPEAN SEARCH REPORT

**Application Number**

EP 23 16 2617

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 202 101 540 U (ZHEJIANG MEISI LITHIUM TECHNOLOGY CO LTD) 4 January 2012 (2012-01-04) * figure 1 * * abstract * | 1-14 | INV. F27B9/02 C01B32/205 F27B9/04 F27B9/14 F27B9/20 F27B9/30 |
| X | CN 104 215 066 B (CHENZHOU SHANSHAN NEW MATERIAL CO LTD) 9 December 2015 (2015-12-09) * figure 1 * * abstract * | 1-14 | |
| X | JP 2005 127682 A (HARADA KAZUHIKO; TAKASHIMA AKIYASU) 19 May 2005 (2005-05-19) * figure 1 * * abstract * | 1-14 | |
| A | CN 209 113 495 U (JIANGSU SAINTY HI TECH & CARBON MAT CO LTD) 16 July 2019 (2019-07-16) * figure 1 * * abstract * | 1-15 | |

**TECHNICAL FIELDS SEARCHED (IPC)**

F27B
F23G
C01B
C04B

The present search report has been drawn up for all claims

| Place of search | Date of completion of the search | Examiner |
|---|---|---|
| The Hague | 22 August 2023 | Peis, Stefano |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 23 16 2617

This annex lists the patent family members relating to the patent documents cited in the above-mentioned European search report.
The members are as contained in the European Patent Office EDP file on
The European Patent Office is in no way liable for these particulars which are merely given for the purpose of information.

22-08-2023

| Patent document cited in search report | | Publication date | Patent family member(s) | Publication date |
|---|---|---|---|---|
| CN 202101540 | U | 04-01-2012 | NONE | |
| CN 104215066 | B | 09-12-2015 | NONE | |
| JP 2005127682 | A | 19-05-2005 | NONE | |
| CN 209113495 | U | 16-07-2019 | NONE | |

EPO FORM P0459

For more details about this annex : see Official Journal of the European Patent Office, No. 12/82